# EUROPÄISCHE PATENTANMELDUNG

(11) **EP 3 520 951 A2**
(43) Veröffentlichungstag der Anmeldung: **07.08.2019**
(21) Anmeldenummer: 19153704.2
(22) Anmeldetag: 25.01.2019
(51) Int. Cl.: B23K 26/03, B23K 26/0622, B23K 26/364

(54) **VERFAHREN ZUM LASERBASIERTEN ERZEUGEN EINER STRUKTUR AN EINER SPANFLÄCHE EINES SPANENDEN WERKZEUGS**

(30) Priorität: 31.01.2018 DE 102018102108
(71) Anmelder: ACSYS Lasertechnik GmbH, 70806 Kornwestheim (DE)
(72) Erfinder: Kreisel, Dipl.-Ing. (FH) Christian, 09648 Mittweida (DE); Polster, Dipl.-Ing. (FH) Marcus, 71642 Ludwigsburg (DE); Kimmel, Gerhard, 70806 Kornwestheim (DE)
(74) Vertreter: Sperling, Thomas

(57) **Zusammenfassung**

Die Erfindung betrifft ein Verfahren zur laserbasierten Erzeugung einer Struktur an einer Spanfläche eines spanenden Werkzeugs (6, 10), bei dem mindestens eine Struktur mittels Linien (3) gebildet wird, wobei die Linien (3) in einem Abstand von maximal 400 µm mit einem Laserstrahl zumindest bereichsweise innerhalb einer vorgegebenen Kontur (4) an mindestens einer Spanfläche (2, 7, 11) des spanenden Werkzeugs (6, 10) erzeugt werden, wobei eine Ausrichtung (3.1, 3.2, 3.3, 3.4) oder ein Verlauf der die Struktur bildenden Linien (3) an einem Profil mindestens einer Schneidenkante (1.1, 1.2, 8, 9, 12, 13) der mindestens einen Spanfläche (2, 7, 11) orientiert wird.

## Beschreibung

Die Erfindung betrifft ein Verfahren zum laserbasierten Erzeugen einer Struktur an einer Spanfläche eines spanenden Werkzeugs zur Verbesserung der Verschleißbeständigkeit beim Zerspanen.

Beim Zerspanen von Werkstoffen werden die eingesetzten Schneidstoffe hohen Belastungen ausgesetzt, welche im Wesentlichen durch Temperaturschwankungen, schlagartige Schnittkräfte und hohe Vorschubgeschwindigkeiten verursacht werden. Infolge von Temperaturschwankungen und durch ungünstige Spanbildung an Spanflächen oder Freiflächen kann es zu einer sogenannten Aufbauschneide kommen, wobei sich an der Schneidenkante Material ansammelt, welches die Geometrie des Schneidkeils nachteilig beeinflusst. Durch die Veränderung des Schneidkeils wird die Schnittkraft bei gleichbleibenden Vorschubgeschwindigkeiten vermindert, was zu Schwingungen führen kann, die sich nachteilig sichtbar auf die Oberflächengüte des bearbeiteten Werkstoffs auswirken, was insbesondere bei Drehteilen und Frästeilen relevant ist. Problematisch ist weiterhin, dass es zum Abbruch der Aufbauschneide kommen kann, wobei Material vom Schneidstoff mitgerissen wird, so dass dieser frühzeitig gewechselt werden muss. Zu den bekannten Maßnahmen zur Vermeidung einer Aufbauschneidenbildung gehören neben der Erhöhung der Schnittgeschwindigkeit und dem Einsatz von beschichteten Schneidstoffen eine Anpassung der spanableitenden Makrogeometrie am Schneidkeil, wodurch das Spanbildungsverhalten beeinflusst werden kann.
Weiterhin ist es bekannt, dass infolge von Mikrotexturen beziehungsweise Mikrostrukturen an Werkzeugoberflächen eine Verringerung der Reibungskraft und der Reibungswärme erreicht werden kann, was sich ebenfalls vorteilhaft auf die Vermeidung einer Aufbauschneidenbildung auswirkt. Erzeugt werden solche Mikrostrukturen üblicherweise mittels Laserstrahlung, wobei mit einem fokussierten Laserstrahl geringe Materialmengen nach einer vorgegebenen Kontur verdampft werden, so dass eine gewünschte Struktur verbleibt. Bei der laserbasierten Erzeugung einer bestimmten Struktur beziehungsweise einer bestimmten Kontur an einer gewünschten Position werden nach den bekannten Verfahren üblicherweise Hilfsstrukturen eingesetzt, wobei die zu erzeugende Struktur beziehungsweise die zu erzeugende Kontur an den Hilfsstrukturen orientiert wird. Dabei ist von Nachteil, dass zum Erzeugen der Hilfsstrukturen ein zusätzlicher Prozessschritt erforderlich ist, was mit einem erhöhten Zeitaufwand bei der Strukturerzeugung einhergeht. Auch eine bloße Projektion von Hilfsstrukturen erfordert einen zusätzlichen Prozessschritt, da das Werkzeug beziehungsweise der zu strukturierende Bereich und die Hilfsstrukturen zueinander in Position gebracht werden müssen. Insbesondere bei der Erzeugung von Mikrostrukturen an nachschleifbaren Werkzeugen, bei denen sich die Dimensionen der Schneidenkanten und der Spanflächen im Nachschliff ändern können, erfordert die Positionierung von Hilfsstrukturen einen zeitlichen Mehraufwand, der mit höheren Kosten verbunden ist.

Es ist daher Aufgabe der Erfindung, ein Verfahren vorzuschlagen, mit dem eine laserbasierte Strukturerzeugung an einer Spanfläche eines spanenden Werkzeugs auf einfache Weise mit geringerem Zeitaufwand realisierbar ist.

Die Aufgabe wird durch ein Verfahren mit den Merkmalen des Patentanspruchs 1 gelöst. Vorteilhafte Ausführungsvarianten sind in den abhängigen Patentansprüchen angegeben.

Erfindungsgemäß wird ein Verfahren zur laserbasierten Erzeugung einer Struktur an einer Spanfläche eines spanenden Werkzeugs vorgeschlagen, bei dem mindestens eine Struktur mittels Linien gebildet wird, wobei die Linien, welche eine Linienbreite von 5 µm bis 100 µm aufweisen können, in einem Abstand von maximal 400 µm mit einem Laserstrahl zumindest bereichsweise innerhalb einer vorgegebenen Kontur an mindestens einer Spanfläche des spanenden Werkzeugs erzeugt werden, wobei eine Ausrichtung oder ein Verlauf der die Struktur bildenden Linien an einem Profil mindestens einer Schneidenkante der mindestens einen Spanfläche orientiert wird.

Für die Erzeugung der die Struktur bildenden Linien können modulierte und gepulste Festkörperlaser mit einer Pulsdauer von kleiner als 1 ms eingesetzt werden. Auch der Einsatz von Gaslasern ist denkbar. Die Fokusgrößen der eingesetzten Laserstrahlung können zwischen 5 µm und 100 µm variieren. Hinsichtlich der Wellenlängen der eingesetzten Laser bestehen keine Beschränkungen. Üblicherweise liegen die Wellenlängen im Nahinfrarotbereich (NIR), im Bereich der UV-Strahlung oder im sichtbaren Bereich des Lichtes. Ferner kann es vorgesehen sein, dass die Erzeugung der die Struktur bildenden Linien unter einer Schutzgasatmosphäre durchgeführt wird.

Eine Orientierung des Verlaufs der Linien an dem Profil der Schneidenkante ist so zu verstehen, dass der Linienverlauf der die Struktur bildenden Linien dem Verlauf des Profils der Schneidenkante nachgebildet wird. Bei geradlinigen Schneidenkanten kann die Struktur daher mit im wesentlichen parallel verlaufenden Linien gebildet werden. Dabei kann es vorgesehen sein, dass eine Linie jeweils an der vorhergehenden Linie orientiert wird. Bei einer nach dem Profil der Schneidenkante orientierten Ausrichtung der die Struktur bildenden Linien bezieht sich die Lage der Linien innerhalb der Kontur jeweils auf das Profil der mindestens einen Schneidenkante.

Der Vorteil des erfindungsgemäßen Verfahrens besteht darin, dass die Struktur beziehungsweise die die Struktur bildenden Linien an dem Profil einer Schneidenkante einer Spanfläche des spanenden Werkzeugs orientiert werden, so dass an der Spanfläche eine Mikrostruktur erzeugt werden kann, ohne dass ein zusätzliches Erzeugen oder Projektieren von Hilfsstrukturen erforderlich ist. Dies ist insbesondere beim Erzeugen von Strukturen an Nachschliffwerkzeugen wie Bohrern oder Hartmetallfräsern vorteilhaft, da sich die Strukturierung der Spanfläche dann jeweils an dem Profil der individuellen Schneidenkante orientiert und somit keine aufwändige Positionierung von Hilfsstrukturen gegenüber der geänderten (nachgeschliffenen) Werkzeugschneide erforderlich ist. Vorteilhafterweise kann dadurch eine Spanflächenstrukturierung erreicht werden, die an das individuelle Profil der Schneidenkante angepasst ist.

Die Kontur begrenzt einen Bereich an der mindestens eine Spanfläche, welcher durch den Laserstrahl zu strukturieren ist. Dabei ist die Kontur im Sinne der Erfindung zumindest bereichsweise am Verlauf des Profils der Schneidenkante des spanenden Werkzeugs orientiert. Die Struktur wird innerhalb der Kontur gebildet, wobei die die Struktur bildenden Linien bevorzugt parallel verlaufen können, wobei die Linien einen wellenförmigen Verlauf oder einen Zick-Zack-Verlauf aufweisen können. Gleichzeitig können die Linien dem Verlauf des Profils der Schneidenkante des spanenden Werkzeugs folgen oder an dem Profil der Schneidenkante ausgerichtet sein.

Eine Struktur kann jeweils mit einer vorgegebenen Anzahl Linien innerhalb einer vorgegeben Kontur erzeugt werden, wobei es vorgesehen sein kann, dass an einer Spanfläche mehrere Strukturen erzeugt werden. Zusammen mit den Linien der ursprünglichen Struktur können mit den Linien der weiteren Strukturen verschiedene Strukturformen, wie beispielsweise eine Keilstruktur oder eine Zick-Zack-Struktur erzeugt werden. Sofern eine Erzeugung von mehreren Strukturen vorgesehen ist, können die Strukturen im Fall von beispielsweise drei Strukturen als erste Struktur, zweite Struktur und dritte Struktur bezeichnet werden, wobei jede Struktur innerhalb einer ihr zugeordneten Kontur erzeugt wird. Gleichermaßen können die Konturen entsprechend dem vorstehenden Beispiel als erste Kontur, zweite Kontur und dritte Kontur bezeichnet werden. Weiterhin kann es vorgesehen sein, dass Konturen überlappend arrangiert werden, so dass die innerhalb der überlappenden Konturen gebildeten Strukturen überlappen, wobei unterschiedliche Strukturformen gebildet werden können. Die weiteren Strukturen oder Konturen können jeweils an der ersten Struktur, welche mit ihren Linien am Profil der Schneidenkante orientiert ist, orientiert sein.

Nach einer Ausführungsvariante des erfindungsgemäßen Verfahrens kann es vorgesehen sein, dass ein bekanntes Profil einer Schneidenkante eines spanenden Werkzeugs als Referenzprofil eingesetzt wird, um anhand des Referenzprofils eine Spanflächenstrukturierung für mehrere gleiche Werkzeuge durchzuführen. Dies ist von Vorteil, sofern eine Serie gleicher Werkzeuge strukturiert werden soll, wobei die zu strukturierenden Spanflächen jeweils gleiche Schneidenkanten aufweisen, so dass keine weiteren Anpassungen hinsichtlich der Position der zu erzeugenden Struktur erforderlich sind. Zum Erzeugen von Strukturen an einer Spanfläche mit variierendem Schneidkantenprofil, wie es bei spanenden Werkzeugen mit mehr als einer Schneide oder bei Nachschliffwerkzeugen der Fall sein kann, kann es vorgesehen sein, dass das Profil der mindestens einen Schneidenkante vorzugsweise optisch erfasst (gescannt) wird. Dabei kann es vorgesehen sein, dass das Profil der Schneidenkante anhand eines Schattenwurfs der betreffenden Schneidenkante erfasst wird. Die Erfassung des Profils der mindestens einen Schneidenkante kann als zusätzlicher Verfahrensschritt des erfindungsgemäßen Verfahrens durchgeführt werden. Vorzugsweise kann der Verfahrensschritt des Erfassens des Profils der mindestens einen Schneidenkante jeweils vor der Erzeugung einer Struktur an der Spanfläche durchgeführt werden.

Als Spanfläche ist die Fläche des spanenden Werkzeugs zu verstehen, über die ein Span bei der Bearbeitung eines Materials abgeführt wird. Eine Spanfläche kann daher an eine Hauptschneidenkante und an eine Nebenschneidenkante eines Bohrers, Fräsers oder Meißels anliegen. Insbesondere bei rotierenden spanenden Werkzeugen wie Bohrern oder Fräsern kann eine Spanfläche eine Wölbung aufweisen, so dass Späne in eine gewünschte Richtung abgeführt werden. Vorzugsweise wird die Wölbung einer Spanfläche bei der Erzeugung der Struktur berücksichtigt, in dem der Fokuspunkt des Laserstrahls der Wölbung der Spanfläche angepasst wird. Auf diese Weise kann über die gewölbte Spanfläche eine gleichmäßige Struktur mit gleichmäßiger Linienbreite und gleichmäßiger Linientiefe (Strukturtiefe) erzeugt werden. Zweckmäßigerweise kann es vorgesehen sein, dass ein Profil beziehungsweise eine Wölbung der mindestens einen Spanfläche vorzugsweise optisch erfasst wird. Die Bestimmung des Profils der mindestens einen Spanfläche kann als zusätzlicher Verfahrensschritt vorgesehen sein.

Weiter kann es vorgesehen sein, dass eine Form oder eine Ausrichtung der die Struktur bildenden Linien in Abhängigkeit des Profils der Schneidenkante und/oder in Abhängigkeit des Profils der Wölbung der Spanfläche erzeugt wird. So kann beispielsweise eine Ausrichtung der Linien gewählt werden, welche eine Spanabfuhr in eine bestimmte Richtung begünstigt.

Nach einer Ausführungsvariante des erfindungsgemäßen Verfahrens werden die die Struktur bildenden Linien in einem vorgegebenen Abstand im Bereich von 10 µm bis 500 µm von der mindestens einen Schneidenkante erzeugt. Weiter kann es vorgesehen werden, dass die die Struktur bildenden Linien in einem variierendem Abstand zueinander erzeugt werden.

Gemäß einer weiteren vorteilhaften Ausgestaltung des erfindungsgemäßen Verfahrens kann es vorgesehen sein, dass die Ausrichtung der die Struktur bildenden Linien um einen vorgegebenen Drehpunkt in einem vorgegebenen Winkel orientiert wird. Vorzugsweise kann die Ausrichtung der die Struktur bildenden Linien zur Schneidenkante in einem Winkel von 0°, 90° oder 135° orientiert werden. Aufgrund der Orientierung nach einem vorgegebenen Winkel können vorteilhafte Strukturen bereitgestellt werden, welche einen Spanabbruch und eine Spanabführung, beispielsweise in eine gewünschte Richtung, begünstigen. Weiterhin können Linien erzeugt werden, welche an dem Profil der Schneidenkante orientiert sind und eine zufällige Winkelausrichtung aufweisen. Zum Erzeugen einer zufälligen Winkelausrichtung kann wie folgt vorgegangen werden: Es wird zunächst ein Vorzugswinkel bezogen auf die Schneidenkante und eine maximale Winkelvarianz definiert. Anschließend werden sämtliche Linien an dem Vorzugswinkel ausgerichtet. Mittels einer Software wird dann die maximale Winkelvarianz für jede Linie mit einer Zufallszahl (Gleitkommazahl) zwischen 1 und -1 multipliziert. Es ergibt sich für jede Linie ein entsprechender Winkel.

Weiterhin kann es vorgesehen sein, dass die Linien mit Unterbrechungen erzeugt werden, wobei die Unterbrechungen eine vorgegebene Länge aufweisen. Weitere Strukturierungsmerkmale können dadurch erreicht werden, dass die Unterbrechungen zwischen mindestens zwei Linien mit einem vorgegebenen Versatz erzeugt werden.
Gemäß einer weiteren Ausgestaltung der Struktur kann es vorgesehen sein, dass die Linien eine Wellenform aufweisen.

Es hat sich gezeigt, dass insbesondere bei Strukturtiefen im Bereich von 5 µm bis 50 µm vorteilhafte Wirkungen hinsichtlich einer verbesserten Spanabführung und verbesserten Verschleißfestigkeit erreicht werden. Es kann daher vorgesehen sein, dass die die Struktur bildenden Linien mit einer Tiefe im Bereich von 5 µm bis 50 µm erzeugt werden.

Gemäß einer vorteilhaft einfachen Ausführung des erfindungsgemäßen Verfahrens kann es vorgesehen sein, dass die Kontur an der Spanfläche von einer Hauptschneidenkante und/oder einer Nebenschneidenkante des spanenden Werkzeugs begrenzt wird. Dadurch ist keine weitere Positionierung der Kontur erforderlich, da die die Struktur bildenden Linien bei dieser Ausführungsvariante über die gesamte Spanfläche erzeugt werden.

Es kann eine weitere Ausführungsvariante des erfindungsgemäßen Verfahrens vorgesehen sein, nach dem die Startpunkte der die Struktur bildenden Linien am Verlauf des Profils der mindestens einen Schneidenkante orientiert werden. Dabei werden die die Struktur bildenden Linien jeweils im gleichen Abstand von der Schneidenkante beginnend erzeugt. Diese Ausführungsvariante eignet sich insbesondere für Strukturen deren Linien in einem Winkel oder senkrecht zu der betreffenden Schneidenkante orientiert sind.

Wie weiter oben bereits ausgeführt worden ist, kann an der mindestens einen Spanfläche mindestens eine weitere Struktur innerhalb einer weiteren Kontur mittels Linien gebildet werden, wobei die Linien mit einer Linienbreite von maximal 100 µm in einem Abstand von maximal 400 µm mit einem Laserstrahl gebildet werden, wobei eine Ausrichtung oder ein Verlauf der die weitere Struktur bildenden Linien an der Kontur der bereits vorhandenen Struktur oder an der Ausrichtung der Linien der bereits vorhandenen Struktur orientiert wird/werden. Weiterhin kann es nach dieser Ausführungsvariante vorgesehen sein, dass die die weitere Struktur bildenden Linien derart ausgerichtet erzeugt werden, dass die Linien der ersten Struktur und die Linien der weiteren Struktur eine Keilform bilden.

Es hat sich gezeigt, dass nach dem erfindungsgemäßen Verfahren Spanflächen von spanenden Werkzeugen auf einfache Weise mittels Laserstrahlung auf einfache Weise mit geringerem Zeitaufwand strukturiert werden können. Weiter hat es sich gezeigt, dass infolge der am Profil der Schneidenkante orientierten Strukturierung der Spanfläche eine verbesserte Spanabführung sowie eine verbesserte Verschleißbeständigkeit erreicht werden kann.

Weitere Einzelheiten, Merkmale und Vorteile von Ausgestaltungen der Erfindung ergeben sich aus der nachfolgenden Beschreibung von Ausführungsbeispielen.

Es zeigen:
- Figur 1:: eine schematische Darstellung zur Erläuterung des erfindungsgemäßen Verfahrens
- Figur 2:: eine Darstellung eines Bohrwerkzeugs mit einer nach dem erfindungsgemäßen Verfahren an einer Spanfläche erzeugten Struktur
- Figur 3:: eine Darstellung eines Bohrwerkzeugs mit einer weiteren nach dem erfindungsgemäßen Verfahren an einer Spanfläche erzeugten Struktur
- Figur 4:: eine Übersicht von Spanflächen mit unterschiedlichen nach dem erfindungsgemäßen Verfahren erzeugten Strukturen sowie bei einer Materialbearbeitung jeweils erhaltenen Spanformen

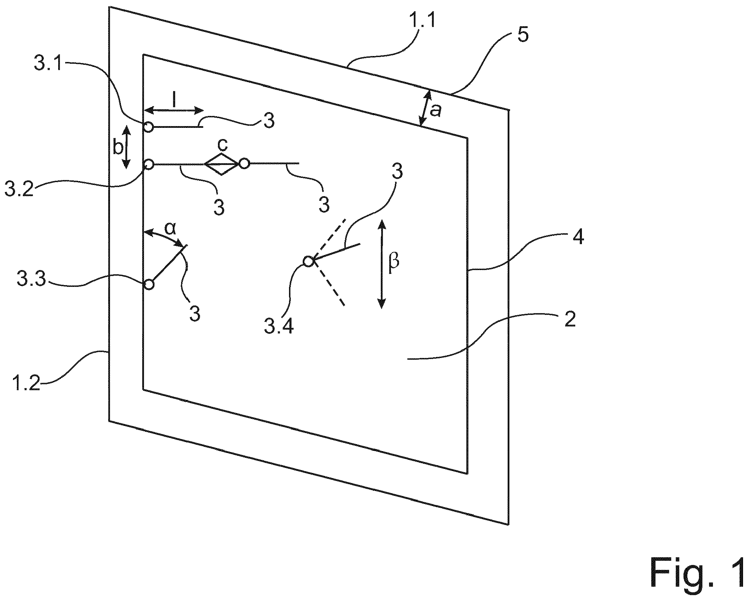

Die Figur 1 zeigt eine schematische Darstellung zur Erläuterung des erfindungsgemäßen Verfahrens zur laserbasierten Erzeugung einer Struktur an einer Spanfläche 2 eines spanenden Werkzeugs. Bei dem erfindungsgemäßen Verfahren wird eine Struktur mit Linien 3 gebildet, wobei die Linien 3 in einem Abstand von maximal 100 µm mit einem Laserstrahl zumindest bereichsweise innerhalb einer vorgegebenen Kontur 4 an der Spanfläche 2 erzeugt werden, wobei eine Ausrichtung oder ein Verlauf der die Struktur bildenden Linien 3 an dem Profil einer Schneidenkante, welche im gezeigten Beispiel eine Hauptschneidenkante 1.1 und eine Nebenschneidenkante 1.2 aufweist, orientiert wird. Im gezeigten Beispiel ist die Kontur 4 dem Profil der Schneidenkanten 1.1, 1.2 nachempfunden. Mit den Bezugszeichen 3.1 bis 3.4 sind jeweils Varianten von Ausrichtungen der die Struktur bildenden Linien 3 zu entnehmen. Dabei wird eine Struktur jeweils von einer Mehrzahl Linien 3 einer der gezeigten Ausrichtungsvarianten gebildet. Die Startpunkte (vergrößert dargestellte Punkte) der mit dem Laserstrahl zu erzeugenden Linien 3 der Ausrichtungsvarianten 3.1, 3.2 und 3.3 sind jeweils am Profil der Nebenschneidenkante 1.2 orientiert. Bei der Ausrichtungsvariante 3.1 ist eine Linienlänge mit der Variablen I gekennzeichnet. Die Variable b kennzeichnet den Abstand zwischen zwei Linien, welcher erfindungsgemäß maximal 100 µm beträgt. Bei der Ausrichtungsvariante 3.2 handelt es sich um eine Struktur, bei der die Linien 3 mit einer Unterbrechung c gebildet sind. Die Länge einer Unterbrechung c ist variabel. Die Ausrichtungsvariante 3.3 ist durch einen vorgegebenen Winkel α gekennzeichnet, um den die Linien 3 am Profil der Schneidenkante orientiert sind. Bei der Ausrichtungsvariante 3.4 sind die Linien 3 jeweils in einer zufälligen Ausrichtung in einem zufälligen Winkel β in einem zufälligen Abstand von der Nebenschneidenkante 1.2 orientiert. Das Bezugszeichen 5 kennzeichnet einen vertikalen Abstand der Kontur 4 von der Hauptschneidenkante 1.1.

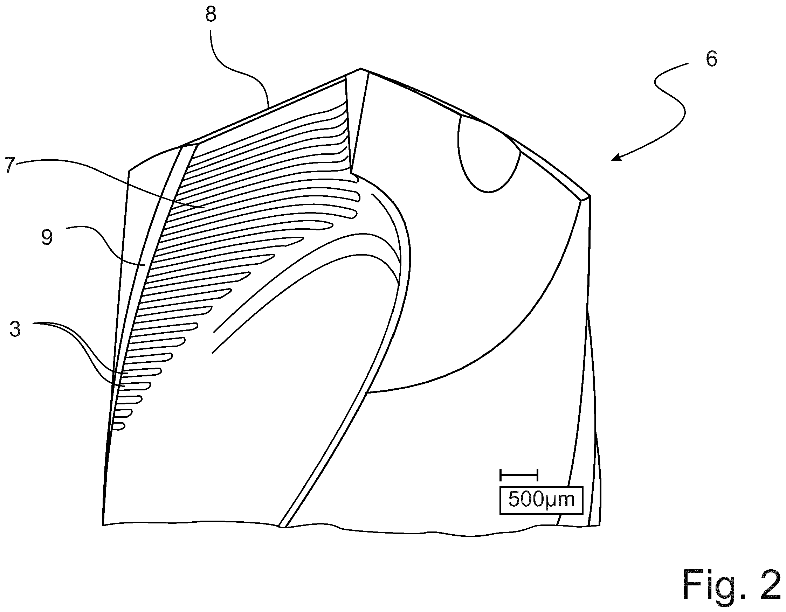

Figur 2 zeigt eine Darstellung eines Bohrwerkzeugs 6 mit einer nach dem erfindungsgemäßen Verfahren an einer Spanfläche 7 erzeugten Struktur. Die Struktur ist mit im Wesentlichen parallel angeordneten Linien gebildet, welche einen Abstand von 100 µm aufweisen. Die Ausrichtung der Linien ist parallel zum Profil der Schneidenkante 8 orientiert, wobei die erste Linie in einem Abstand von 200 µm zur Schneidenkante 8 gebildet ist. Die Strukturtiefe, das heißt die Tiefe der Linien in der Spanfläche 7, beträgt 20 µm. Die Kontur der Struktur erstreckt sich über die gesamte Spanfläche und wird von der Nebenschneidenkante 9 begrenzt.

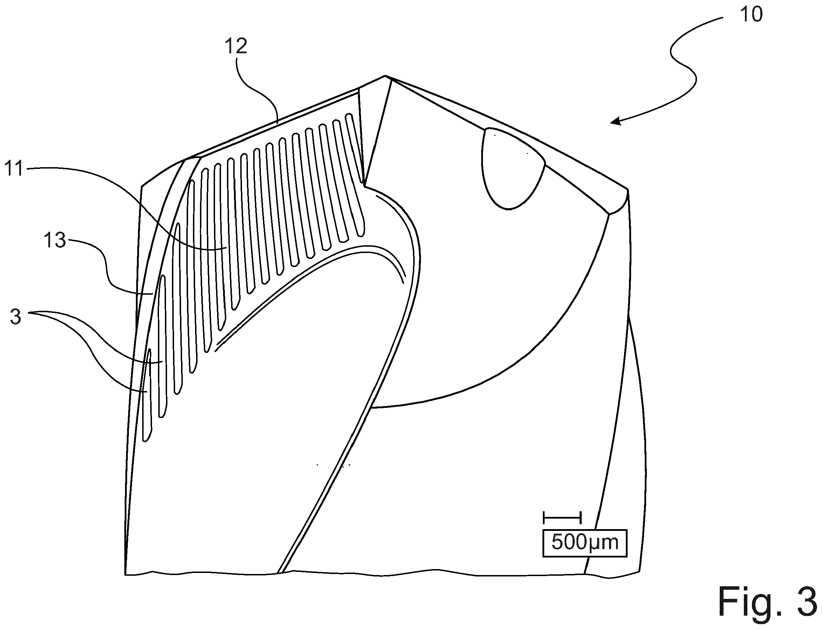

Die Figur 3 zeigt eine Darstellung eines weiteren Bohrwerkzeugs 10 mit einer weiteren nach dem erfindungsgemäßen Verfahren an einer Spanfläche 11 erzeugten Struktur mit senkrecht zum Profil der Schneidenkante 12 orientierten, im Wesentlichen parallel verlaufenden Linien. Der Abstand der Startpunkte der Linien von der Schneidenkante 12 beträgt 200 µm. Der Abstand zwischen den Linien beträgt 100 µm. Die Linientiefe beträgt 20 µm. Die Kontur der Struktur erstreckt sich über die Spanfläche 11 und wird durch die Nebenschneidenkante 13 begrenzt.

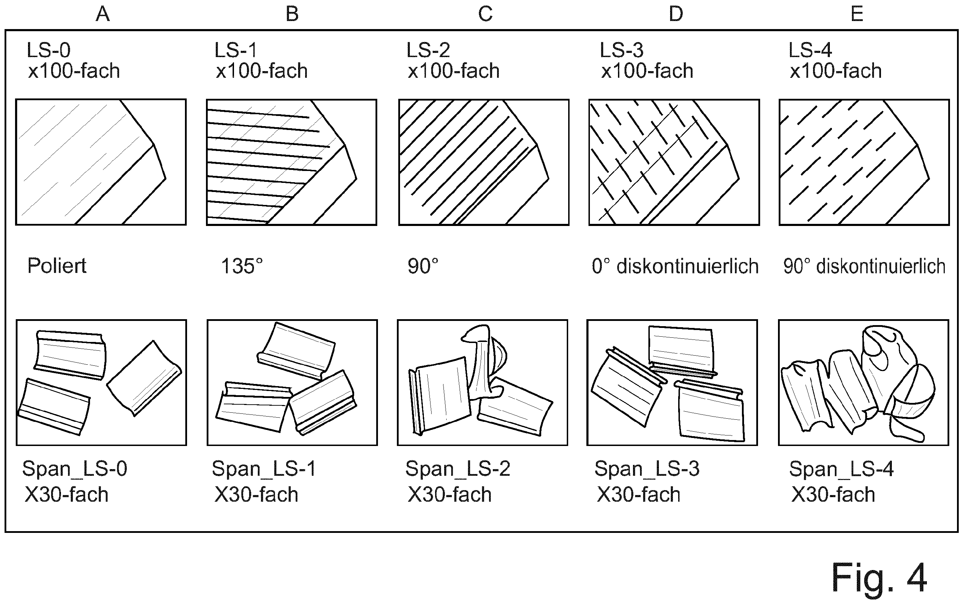

Figur 4 zeigt eine Übersicht von Spanflächen mit unterschiedlichen nach dem erfindungsgemäßen Verfahren erzeugten Strukturen sowie bei einer Materialbearbeitung jeweils erhaltenen Spanformen. Bei den in A bis E der ersten Zeile der Übersicht gezeigten Spanflächen handelt es sich um Spanflächen eines Fräswerkzeugs für Polyamid Fräsanwendungen in einer 100-fachen Vergrößerung. In Spalte A ist eine polierte Spanfläche dargestellt, welche keine Struktur aufweist. Spalte B zeigt eine Spanfläche mit einer Struktur in Form von durchgehenden Linien, welche in einem Winkel von 135° zur Schneidenkante orientiert sind. In der Spalte C ist ebenfalls eine Struktur mit durchgehenden Linien dargestellt, wobei die Linien senkrecht (90°) zur Schneidenkante orientiert sind. Der Abbildung in Spalte D ist eine Struktur mit unterbrochenen Linien zu entnehmen, wobei die Unterbrechungen zwischen den Linien einen gleichmäßigen Versatz aufweisen. Die Linien sind parallel am Verlauf des Profils der Schneidenkante orientiert. Spalte E zeigt eine Spanfläche mit einer Struktur, die, wie in Spalte D dargestellt, mit unterbrochenen Linien gebildet ist, wobei die Linien senkrecht zur Schneidenkante ausgerichtet sind.

Es hat sich gezeigt, dass mit spanenden Werkzeugen, die eine nach dem erfindungsgemäßen Verfahren erzeugte Struktur an ihrer Spanfläche aufweisen, bei der Bearbeitung von Metallen eine Verringerung der Spankräfte an der Werkzeugschneide um bis zu 25%, eine Verringerung der Gratbildung um 25% und eine Verringerung der Aufbauschneide erreicht werden kann. Darüber hinaus kann eine Verringerung von Abplatzungen oder Ausbrüchen am Werkzeug beobachtet werden.
Bei der Bearbeitung von Kunststoffen kann mit spanenden Werkzeugen, die eine nach dem erfindungsgemäßen Verfahren erzeugte Struktur an ihrer Spanfläche aufweisen, eine Verkürzung des Spans um bis zu 60% erreicht werden, was eine Bildung von kurzen Spänen (Chips) begünstigt. Vorteilhafterweise können kurze Späne durch Absaugen einfacher abtransportiert werden. Aufgrund des günstigen Spanabbruchverhaltens an den erzeugten Strukturen wird eine unerwünschte Fließspanbildung beziehungsweise Wendelspanbildung vermieden.

### Bezugszeichenliste

- 1.1,1.2: Schneidenkante
- 2: Spanfläche
- 3: Linien
- 3.1 bis 3.4: Ausrichtungsvarianten
- 4: Kontur
- 5: Abstand
- 6: Bohrwerkzeug
- 7: Spanfläche
- 8: Schneidenkante, Hauptschneidenkante
- 9: Nebenschneidenkante
- 10: Bohrwerkzeug
- 11: Spanfläche
- 12: Schneidenkante, Hauptschneidenkante
- 13: Nebenschneidenkante
- l: Linienlänge
- c: Unterbrechungslänge
- b: Linienabstand
- α: vorgegebener Winkel
- β: zufälliger Winkel

## Patentansprüche

1. Verfahren zur laserbasierten Erzeugung einer Struktur an einer Spanfläche eines spanenden Werkzeugs (6, 10), bei dem mindestens eine Struktur mittels Linien (3) gebildet wird, wobei die Linien (3) in einem Abstand von maximal 400 µm mit einem Laserstrahl zumindest bereichsweise innerhalb einer vorgegebenen Kontur (4) an mindestens einer Spanfläche (2, 7, 11) des spanenden Werkzeugs (6, 10) erzeugt werden, wobei eine Ausrichtung (3.1, 3.2, 3.3, 3.4) oder ein Verlauf der die Struktur bildenden Linien (3) an einem Profil mindestens einer Schneidenkante (1.1, 1.2, 8, 9, 12, 13) der mindestens einen Spanfläche (2, 7, 11) orientiert wird.

2. Verfahren nach Anspruch 1, **dadurch gekennzeichnet, dass** das Profil der mindestens einen Schneidenkante (1.1, 1.2, 8, 9, 12, 13) vorzugsweise optisch erfasst wird.

3. Verfahren nach Anspruch 1 oder 2, **dadurch gekennzeichnet, dass** ein Profil einer Wölbung der mindestens einen Spanfläche (2, 7, 11) erfasst wird, wobei die Wölbung bei der Erzeugung der Linien (3) berücksichtigt wird.

4. Verfahren nach einem der vorhergehenden Ansprüche 1 bis 3, **dadurch gekennzeichnet, dass** das die Linien (3) in einem vorgegebenen Abstand (5) von der mindestens einen Schneidenkante (1.1, 1.2, 8, 9, 12, 13) erzeugt wird.

5. Verfahren nach einem der vorhergehenden Ansprüche 1 bis 4, **dadurch gekennzeichnet, dass** die Ausrichtung (3.1, 3.2, 3.3, 3.4) der die Struktur bildenden Linien (3) um einen vorgegebenen Drehpunkt in einem vorgegebenen Winkel α orientiert wird.

6. Verfahren nach einem der vorhergehenden Ansprüche 1 bis 5, **dadurch gekennzeichnet, dass** die Linien (3) mit Unterbrechungen c erzeugt werden, wobei die Unterbrechungen c eine vorgegebene Länge aufweisen.

7. Verfahren nach Anspruch 6, **dadurch gekennzeichnet, dass** die Unterbrechungen c zwischen mindestens zwei Linien (3) mit einem vorgegebenen Versatz erzeugt werden.

8. Verfahren nach einem der vorhergehenden Ansprüche 1 bis 7, **dadurch gekennzeichnet, dass** die Linien (3) eine Wellenform aufweisen.

9. Verfahren nach einem der vorhergehenden Ansprüche 1 bis 8, **dadurch gekennzeichnet, dass** die Linien (3) mit einer Tiefe im Bereich von 5 µm bis 50 µm erzeugt werden.

10. Verfahren nach einem der vorhergehenden Ansprüche 1 bis 9, **dadurch gekennzeichnet, dass** die Kontur (4) von einer Hauptschneidenkante (8, 12) und/oder einer Nebenschneidenkante (9, 13) des spanenden Werkzeugs (6, 10) begrenzt wird.

11. Verfahren nach einem der vorhergehenden Ansprüche 1 bis 10, **dadurch gekennzeichnet, dass** die Startpunkte der die Struktur bildenden Linien (3) am Verlauf des Profils der mindestens einen Schneidenkante (1.1, 1.2, 8, 9, 12, 13) orientiert werden.

12. Verfahren nach einem der vorhergehenden Ansprüche 1 bis 11, **dadurch gekennzeichnet, dass** an der mindestens einen Spanfläche (2, 7, 11) mindestens eine weitere Struktur innerhalb einer weiteren Kontur mittels Linien (3) gebildet wird, wobei die Linien (3) mit einer Linienbreite von maximal 100 µm in einem Abstand von maximal 400 µm mit dem Laserstrahl erzeugt werden, wobei eine Ausrichtung (3.1, 3.2, 3.3, 3.4) oder ein Linienverlauf der die weitere Struktur bildenden Linien (3) an der Kontur der vorhandenen Struktur oder an der Ausrichtung der Linien (3) der vorhandenen Struktur orientiert wird.

13. Verfahren nach Anspruch 12, **dadurch gekennzeichnet, dass** die die weitere Struktur bildenden Linien (3) derart ausgerichtet werden, dass die Linien (3) der Struktur und die Linien (3) der weiteren Struktur eine Keilform bilden.
